# EUROPÄISCHE PATENTSCHRIFT

(11) **EP 0 779 169 B1**
(45) Veröffentlichungstag und Bekanntmachung des Hinweises auf die Patenterteilung: **22.03.2000**
(21) Anmeldenummer: 96118488.4
(22) Anmeldetag: 19.11.1996
(51) Int. Cl.: B60H 1/00

(54) **Bedieneinrichtung für eine Zusatzheizung in Kraftfahrzeugen**
Operating device for supplementary heating in vehicles
Dispositif de commande pour un chauffage supplémentaire dans les véhicules

(30) Priorität: 13.12.1995 DE 19546555
(43) Veröffentlichungstag der Anmeldung: 18.06.1997
(73) Patentinhaber: DaimlerChrysler AG, 70567 Stuttgart (DE)
(72) Erfinder: Hilpert, Wolfgang, 70619 Stuttgart (DE); Stotz, Manfred, 73773 Aichwald 2 (DE)

(56) Entgegenhaltungen:
- DE-A- 2 518 444
- DE-A- 3 024 983
- DE-A- 19 515 353
- DE-C- 4 315 379
- DE-U- 8 806 572
- US-A- 4 274 265
- US-A- 5 350 114
- PATENT ABSTRACTS OF JAPAN vol. 004, no. 169 (M-043), 21.November 1980 & JP 55 119540 A (NISSAN MOTOR CO LTD), 13.September 1980,

## Beschreibung

Die Erfindung bezieht sich auf eine Bedieneinrichtung für eine Zusatzheizung in Kraftfahrzeugen gemäß dem Oberbegriff des Anspruchs 1.

Es ist bereits eine derartige Bedieneinrichtung für eine Zusatzheizung aus der DE 43 15 379 C1 bekannt, bei welcher ein Heizgerät durch eine zeitprogrammierbare Vorwahluhr, eine Sofortheiztaste oder durch eine Fernbedienung in Betrieb gesetzt werden kann.

Die DE 30 24 983 A1 beschreibt eine Bedieneinrichtung für eine Zusatzheizung in Kraftfahrzeugen, bestehend aus einem Vorwahlzeitmodul, einer Bedieneinheit und einem Steuergerät.

Als nachteilig könnte bei den genannten Ausführungsformen erachtet werden, daß für die Bedienung der Zusatzheizung zusätzlich zu der bereits im Fahrzeug eingebauten Uhr eine Schaltuhr, welche als Vorwahluhr ausgelegt ist, eingebaut werden muß. Dadurch müssen beim Wechsel von Sommer- auf Winterzeit und umgekehrt und beim Überfahren von Zeitzonen zwei Uhren neu gestellt werden.

Ferner ist eine Zeitprogrammierung der Vorwahluhr durch die Fernbedienung nicht möglich.

Aufgabe der Erfindung ist es, eine gattungsgemäße Bedieneinrichtung für eine Zusatzheizung derart weiterzubilden, daß der Bedienkomfort der Zusatzheizung erhöht und gleichzeitig die zusätzliche Schaltuhr eingespart wird.

Diese Aufgabe wird erfindungsgemäß mit den Merkmalen des Anspruches 1 gelöst, wobei die Merkmale der Unteransprüche weitere vorteilhafte Ausgestaltungen und Weiterbildungen kennzeichnen. Erfindungsgemäß wird die gestellte Aufgabe dadurch gelöst, daß ein Zeitgeber, welcher ein die aktuelle Uhrzeit repräsentierendes Zeitsignal erzeugt und Teil der bereits im Fahrzeug eingebauten Uhr sein kann, benutzt wird, um sowohl die Zeitanzeige der im Fahrzeug bereits eingebauten Uhr als auch ein programmierbares Vorwahlzeitmodul mit dem Zeitsignal zu versorgen. Zusätzlich kann die Zeitanzeige der bereits im Fahrzeug eingebauten Uhr dazu benutzt werden, um wenigstens während des Programmiervorgangs die gewünschte Einschaltzeit anzuzeigen bzw. können Mittel vorzusehen werden, um bei Bedarf die programmierten Einschaltzeiten anzuzeigen. Das Vorwahlzeitmodul besteht aus mindestens einem Speicher zur Aufnahme der programmierten Einschaltzeiten und aus einem Komparator, welcher ständig das Zeitsignal mit den programmierten Einschaltzeiten vergleicht, und bei Übereinstimmung ein Einschaltsignal erzeugt, welches zu einem Signalerfaß- und Auswertemodul übertragen wird, welches durch das Steuergerät die Ansteuerung des Heizgerätes übernimmt.

Bei einer besonders vorteilhaften Ausgestaltung sind der Zeitgeber und die Zeitanzeige Teil einer im Kombinationsinstrument integrierten Uhr und das Vorwahlzeitmodul und das Signalerfaß- und Auswertemodul sind im Steuergerät integriert. Das notwendige Zeitsignal wird dann über den Datenbus vom Zeitgeber zum Komparator übertragen.

Es ist aber auch vorstellbar die Zeitanzeige der im Fahrzeug bereits eingebauten Uhr, den Zeitgeber und das Vorwahlzeitmodul zu einer Baugruppe zusammenzufassen und im Kombinationsinstrument zu integrieren.

Die eigentliche Bedienung der Zusatzheizung erfolgt durch eine Fernbedienungseinrichtung, die aus einem Sender und einem Empfänger besteht.

Des weiteren besteht die Möglichkeit, z. B. bei Ausfall der Fernbedienung, über eine im Fahrzeug angeordnete Bedieneinheit die Zusatzheizung an- oder abzuschalten bzw. programmierte Einschaltzeiten wieder zu löschen. Die Bedieneinheit dient also nur noch zur Notbedienung der Zusatzheizung und kann deshalb auch in einem Ablagefach untergebracht werden.

Das Steuergerät schaltet das Heizgerät nach einer bestimmten Zeitdauer automatisch wieder ab, wenn die Zusatzheizung nicht vorher durch die Fernbedienung oder die Bedieneinheit abgeschaltet wurde.

Zusätzlich sind im Fahrzeug Signalmittel vorgesehen, welche verschiedene Betriebszustände der Zusatzheizung signalisieren. Insbesondere sollte der Benutzer über die Betriebszustände "Standheizung an" und "Einschaltzeit programmiert" informiert werden. Das Signalisieren des Betriebszustandes "Einschaltzeit programmiert" ist wichtig, da Zusatzheizungen nicht an jedem Ort betrieben werden dürfen und der Benutzer deshalb bereits programmierte Einschaltzeiten vor dem Abstellen des Fahrzeugs löschen muß. Die Signalmittel können als optische Anzeigemittel, beispielsweise als Leuchtdioden, und/oder als akustische Signalgeber ausgeführt sein. In einer vorteilhaften Ausführung sind die Signalgeber in der im Fahrzeug angeordneten Bedieneinheit integriert. Es sind aber auch andere Einbauorte, beispielsweise das Kombinationsinstrument, denkbar.

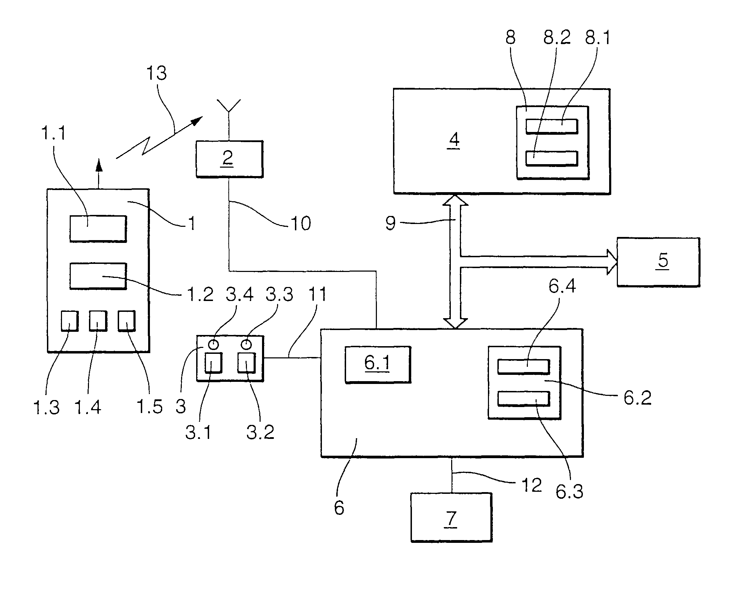

Nachfolgend ist ein Ausführungsbeispiel der Erfindung anhand der einzigen Figur näher beschrieben. Diese zeigt schematisch ein Blockschaltbild einer Bedieneinrichtung für eine Zusatzheizung.

Wie aus der Zeichnung ersichtlich ist, besteht die Bedieneinrichtung aus einem tragbaren Sender 1, einem Empfänger 2 einer Bedieneinheit 3, einer im Kombinationsinstrument 4 eingebauten Uhr 8 mit Zeitgeber 8.1 und Zeitanzeige 8.2, einem Steuergerät 6 mit Signalerfaß- und Ansteuermodul 6.1 und integriertem Vorwahlzeitmodul 6.2, welches aus einem Speicher 6.3 und einem Komparator 6.4 besteht, und einem Datenbus 9 sowie verschiedenen elektrischen Verbindungen 10, 11, 12. Zusätzlich ist ein Klimasteuergerät 5 und ein Heizgerät 7 dargestellt.

Es ergibt sich folgende Funktionsweise für die Bedienung der Zusatzheizung:

Alle vom tragbaren Sender 1 erzeugten Signale zur Bedienung der Zusatzheizung werden über die Übertragungsstrecke 13 zum fahrzeugfesten Empfänger 2 gesendet. Über die elektrische Verbindung 10, die als Datenbus ausgeführt sein kann, werden die Signale zum Signalerfaß- und Auswertemodul 6.1 im Steuergerät 6 übertragen. Im Signalerfaß- und Auswertemodul 6.1 werden alle Signale zur Bedienung der Zusatzheizung erfaßt und ausgewertet. Nach der Auswertung werden vom Signalerfaß- und Auswertemodul 6.1 die der Bedeutung der Bediensignale entsprechenden Aktionen eingeleitet.

Zur Programmierung der Einschaltzeiten enthält der Sender drei Stelltasten und eine Senderanzeige 1.2. Dabei ist im Ausführungsbeispiel eine der Stelltasten als Programmiertaste 1.3 ausgebildet. Durch diese können im Rollmode die bereits programmierten Einschaltzeiten nacheinander aufgerufen und auf der Senderanzeige 1.2 angezeigt werden. Dabei wird bei der ersten Betätigung der Programmiertaste 1.3 die Senderanzeige 1.2 eingeschaltet und die erste Einschaltzeit angezeigt. Bei nochmaliger Betätigung wird die zweite Einschaltzeit angezeigt usw..

Das Abspeichern einer gewünschten Einschaltzeit erfolgt in eingeblendetem Zustand durch Betätigen eines Ein/Ausschalters 1.1, der ebenfalls Teil des Senders 1 ist. Die gewünschte Einschaltzeit wird als Einschaltzeitsignal vom Sender 1 über die Übertragungsstrecke 13, den Empfänger 2 und die elektrische Verbindung 10 zum Signalerfaß- und Auswertemodul 6.1 im Steuergerät 6 übertragen.

Dort wird das Einschaltzeitsignal als gewünschte Einschaltzeit in den Speicher 6.3 des Vorwahlzeitmoduls 6.2 eingeschrieben.

Um zum gewünschten Einschaltzeitpunkt ein Einschaltsignal zu generieren, ist der Ausgang des Speichers 6.3 mit einem Eingang des Komparators 6.4 verbunden. Einem anderen Eingang des Komparators wird über das Signalerfaß- und Auswertemodul 6.1 und den Datenbus 9 ein Zeitsignal, welches vom Zeitgeber 8.1 erzeugt wird und die aktuelle Uhrzeit repräsentiert, zugeführt. Der Komparator 6.4 vergleicht laufend den Speicherinhalt mit dem Zeitsignal und liefert bei Übereinstimmung ein Einschaltsignal an das Signalerfaß- und Auswertemodul 6.1. Das Signalerfaß- und Auswertemodul 6.1 veranlaßt daraufhin das Steuergerät 6 die entsprechenden Baugruppen, wie das Heizgerät 7 über die elektrische Verbindung 12 und/oder das Klimasteuergerät 5 über den Datenbus 9, anzusteuern. Anschließend löscht das Signalerfaß- und Auswertemodul 6.1 die entsprechende gespeicherte Einschaltzeit aus dem Speicher 6.3.

Nach einem Einschaltvorgang schaltet das Steuergerät 6 nach einer bestimmten Zeitdauer, beispielsweise 1 Stunde, die angesteuerten Baugruppen (Heizgerät 7, Klimasteuergerät 5) wieder ab.

Zum Verändern der auf der Senderanzeige 1.2 dargestellten Einschaltzeit dienen die beiden anderen Stelltasten. Dabei ist eine Stelltaste als Vorwärtsstelltaste 1.4 zum Inkrementieren der angezeigten Zeit und eine andere Stelltaste als Rückwärtsstelltaste 1.5 zum Dekrementieren der angezeigten Zeit ausgebildet.

Prinzipiell sind jedoch auch andere Verfahren zum Einstellen der gewünschten Einschaltzeit denkbar, so könnte beispielsweise die Vorwärtsstelltaste 1.4 als H-Stelltaste zur Programmierung der Stunden und die Rückwärtsstelltaste 1.5 als M-Stelltaste zur Programmierung der Minuten ausgebildet sein. Bei Betätigung der entsprechenden Stelltaste wird dabei die zugehörige Anzeige solange um 1 inkrementiert, bis die entsprechende Stelltaste wieder losgelassen wird, wobei die Stundenanzeige Werte von 00 bis 23 annehmen kann und die Minutenanzeige Werte von 00 bis 59.

Während der Programmierung zeigt die Senderanzeige 1.2 die eingestellten Zeiten an.

Im beschriebenen Ausführungsbeispiel können bis zu drei verschiedene Einschaltzeiten programmiert werden.

Wird innerhalb einer bestimmten Zeitdauer, z. B. 10 Sekunden, keine der drei Stelltasten betätigt, so schaltet sich die Senderanzeige 1.2 automatisch ab.

Der Sender 1 enthält jedoch keine Uhr, sondern die auf der Senderanzeige 1.2 angezeigten Zeiten sind ausschließlich gewünschte Einschaltzeiten.

Soll eine programmierte Einschaltzeit nicht verändert sondern gelöscht werden so muß im Ausführungsbeispiel die Programmiertaste 1.3 sooft betätigt werden, bis die Einschaltzeit, die gelöscht werden soll, auf der Senderanzeige 1.2 angezeigt wird.

Anschließend müssen die Vorwärtsstelltaste 1.4 und die Rückwärtsstelltaste 1.5 gleichzeitig betätigt werden. Dadurch wird die angezeigte Einschaltzeit auf der Senderanzeige 1.2 gelöscht. Durch Betätigen des Ein/Ausschalters 1.1 wird das entsprechende Löschsignal vom Sender 1 über die Übertragungsstrecke 13, den Empfänger 2 und die elektrische Verbindung 10 zum Signalerfaß- und Auswertemodul 6.1 im Steuergerät 6 übertragen. Nach Auswertung des Löschsignals löscht das Signalerfaß- und Auswertemodul 6.1 die entsprechende gespeicherte Einschaltzeit aus dem Speicher 6.3.

Als weitere Bedienfunktion kann mit dem Sender 1 unabhängig von den programmierten Einschaltzeiten die Zusatzheizung sofort ein- bzw. ausgeschaltet werden.

Dazu muß der Ein/Ausschalter 1.1, der beispielsweise als Wipptaste ausgeführt ist, bei abgeschalteter Senderanzeige 1.2 betätigt werden. Der Sender 1 generiert daraufhin ein entsprechendes Ein- bzw. Ausschaltsignal, welches über die Übertragungsstrecke 13, den Empfänger 2 und die elektrische Verbindung 10 zum Signalerfaß- und Ansteuermodul 6.1 im Steuergerät 6 übertragen wird.

Das Signalerfaß- und Auswertemodul 6.1 veranlaßt daraufhin das Steuergerät 6 die entsprechenden Baugruppen, wie das Heizgerät 7 über die elektrische Verbindung 12 und/oder das Klimasteuergerät 5 über den Datenbus 9, anzusteuern.

Nach einem Einschaltvorgang schaltet das Steuergerät 6 nach einer bestimmten Zeitdauer, beispielsweise 1 Stunde, die angesteuerten Baugruppen (Heizgerät 7, Klimasteuergerät 5) wieder ab.

Zusätzlich zur Fernbedienung besteht die Möglichkeit die Zusatzheizung über die Bedieneinheit 3 zu bedienen. Zu diesem Zweck enthält die Bedieneinheit 3 einen Ein/Ausschalter 3.1, der als Kippschalter ausgeführt sein kann und bei Betätigung ein entsprechendes Ein- bzw. Ausschaltsignal erzeugt, und einen Löschschalter 3.2, der bei Betätigung ein Gesamtlöschsignal zum Löschen der programmierten Einschaltzeiten erzeugt. Die Bediensignale der Bedieneinheit werden über die elektrische Verbindung 11, die als Datenbus ausgeführt sein kann, zum Signalerfaß- und Ansteuermodul 6.1 im Steuergerät 6 übertragen.

Das Signalerfaß- und Ansteuermodul 6.1 erfaßt die verschiedenen Bediensignale und wertet sie aus.

Bei einem Gesamtlöschsignal werden alle gespeicherten Einschaltzeiten aus dem Speicher 6.3 gelöscht.

Bei einem Ein- bez. Ausschaltsignal veranlaßt das Signalerfaß- und Ansteuermodul das Steuergerät 6 die entsprechenden Baugruppen anzusteuern.

Nach einem Einschaltvorgang schaltet das Steuergerät 6 nach einer bestimmten Zeitdauer beispielsweise 1 Stunde die angesteuerten Baugruppen wieder ab.

Zusätzlich sind in der Bedieneinheit 3 im Fahrzeug als Signalmittel eine erste Leuchtdiode 3.3, welche den Betriebszustand "Einschaltzeit programmiert" optisch signalisiert, und eine zweite Leuchtdiode 3.4, welche den Betriebszustand "Standheizung an" optisch signalisiert, vorgesehen. Es ergibt sich folgender Ablauf:

Nach dem Einschreiben der gewünschten Einschaltzeit in den Speicher 6.3 des Vorwahlzeitmoduls 6.2 wird über die elektrische Verbindung 11, welche als Datenbus ausgeführt sein kann, die erste Leuchtdiode 3.3 in der Bedieneinheit 3 angesteuert. Erst wenn alle gewünschten Einschaltzeiten wieder aus dem Speicher 6.3 gelöscht sind, wird die Ansteuerung der ersten Leuchtdiode beendet.

Nach einem erfolgten Einschaltvorgang wird über die elektrische Verbindung 11 die zweite Leuchtdiode 3.4 in der Bedieneinheit 3 angesteuert. Nach einem erfolgten Ausschaltvorgang wird die Ansteuerung der zweiten Leuchtdiode 3.4 in der Bedieneinheit 3 beendet.

Es sind aber auch noch andere Möglichkeiten der Ansteuerung der beiden Leuchtdiode 3.3 und 3.4 vorstellbar. So könnten die beiden Leuchtdioden 3.3 und 3.4 beispielsweise blinkend ausgeführt werden, um die Anzeige visuell zu verstärken.

Desweiteren könnte der Benutzer beispielsweise erst bei Abschaltung des Motors über eine noch programmierte Einschaltzeit informiert werden.

Als weitere Ausgestaltungsmöglichkeit könnten die im Speicher 6.3 gespeicherten Einschaltzeiten wenigstens während der Einschreibung in den Speicher 6.3 auf der Zeitanzeige 8.2 angezeigt werden. Dazu müßte vom Signalerfaß- und Auswertemodul 6.1 die Einschaltzeit über den Datenbus 9 zur Zeitanzeige in der bereits im Fahrzeug eingebauten Uhr übertragen werden.

Zudem könnte ein Betätigungsmittel im Fahrzeug vorgesehen werden durch welches bei Bedarf die Anzeige der gespeicherten Einschaltzeiten auf der Zeitanzeige 8.2 veranlaßt wird.

Als zusätzliche Ausführungsform ist es vorstellbar die Fernbedienungsfunktion der Zusatzheizung in die bereits vorhandene Fernbedienung für verschiedene Fahrzeugfunktionen (z. B. Zentralverriegelung, Komfortschließung, usw.) zu integrieren, so daß für die Fernbedienung der verschiedenen Fahrzeugfunktionen nur noch eine Sendereinheit benötigt wird.

## Patentansprüche

1. Bedieneinrichtung für eine Zusatzheizung in Kraftfahrzeugen bestehend aus einem Vorwahlzeitmodul (6.2), einem Zeitgeber, einer Zeitanzeige, einer Bedieneinheit (3) und einem Steuergerät (6), sämtliche innerhalb des Fahrzeugs angeordnet, wobei die Zusatzheizung über das Vorwahlzeitmodul (6.2) zeitprogrammierbar ist, wobei im Zeitgeber ein die aktuelle Uhrzeit repräsentierendes Zeitsignal erzeugt wird, und wobei das Zeitsignal sowohl dem Vorwahlzeitmodul als auch der Zeitanzeige zugeführt wird,
**dadurch gekennzeichnet,**
daß zur Erzeugung des Zeitsignals und zur Anzeige der aktuellen Uhrzeit ein Zeitgeber (8.1) und eine Zeitanzeige (8.2) einer ohnehin im Fahrzeug angeordneten Uhr (8) Verwendung finden.

2. Bedieneinrichtung nach Anspruch 1,
dadurch gekennzeichnet,
daß die fahrzeugseitige Zeitanzeige (8.2) wenigstens während der Zeitprogrammierung des Vorwahlzeitmoduls (6.2) als Anzeige der in einen Speicher (6.3) eingegebenen gewünschten Einschaltzeit dient.

3. Bedieneinrichtung nach Anspruch 1,
dadurch gekennzeichnet,
daß die Zeitprogrammierung des Vorwahlzeitmoduls (6.2) mittels eines Senders (1) durchgeführt wird,
wobei der Sender (1) eine Senderanzeige (1.2), einen Ein/Ausschalter (1.1), eine Programmiertaste (1.3), eine Vorwärtsstelltaste (1.4) und eine Rückwärtsstelltaste (1.5) aufweist und wobei mit dem Sender (1) mehrere gewünschte Einschaltzeiten programmiert werden können.

4. Bedieneinrichtung nach Anspruch 3,
dadurch gekennzeichnet,
daß die Senderanzeige (1.2) wenigstens während der Zeitprogrammierung des Vorwahlzeitmoduls (6.2) die gewünschte Einschaltzeit anzeigt.

5. Bedieneinrichtung nach Anspruch 3,
dadurch gekennzeichnet,
daß mit der Programmiertaste (1.3) in einem Rollmode die verschiedenen programmierten Einschaltzeiten abgerufen und auf der Senderanzeige (1.2) angezeigt werden können.

6. Bedieneinrichtung nach Anspruch 3,
dadurch gekennzeichnet,
daß der Sender (1) zusätzliche Bedienelemente enthält, welche zur Bedienung von anderen Fahrzeugbaugruppen benötigt werden.

7. Bedieneinrichtung nach Anspruch 1,
dadurch gekennzeichnet,
daß das Vorwahlzeitmodul (6.2) einen Speicher (6.3) und einen Komparator (6.4) umfaßt.

8. Bedieneinrichtung nach Anspruch 1,
dadurch gekennzeichnet,
daß das Vorwahlzeitmodul (6.2) im Steuergerät (6) integriert ist.

9. Bedieneinrichtung nach Anspruch 1,
dadurch gekennzeichnet,
daß die Uhr (8) Teil eines Kombinationsinstruments (4) ist.

10. Bedieneinrichtung nach Anspruch 1,
dadurch gekennzeichnet,
daß die Zeitanzeige (8.2), der Zeitgeber (8.1) und das Vorwahlzeitmodul (6.2) zu einer Baugruppe zusammengefaßt sind.

11. Bedieneinrichtung nach Anspruch 10,
dadurch gekennzeichnet,
daß die Baugruppe Teil des Kombinationsinstruments (4) ist.

12. Bedieneinrichtung nach Anspruch 1,
dadurch gekennzeichnet,
daß in der Bedieneinheit (3) mindestens ein Signalmittel vorgesehen ist,
wobei die Signalmittel Signale ausgeben, welche jeweils einen Betriebszustand der Zusatzheizung signalisieren.

## Claims

1. An operating device for an auxiliary heating system in motor vehicles consisting of a pre-selection time module (6.2), a timer, a time display, an operating unit (3) and a control device (6), all positioned within the vehicle, it being possible to program the auxiliary heating system using the pre-selection time module (6.2), whereby a time signal representing the actual time is generated in the timer and the time signal is fed to both the pre-selection time module and the time display,
**characterised in that**
a timer (8.1) and a time display (8.2) in a clock already located in the vehicle are used in order to generate the time signal and to display the current time.

2. An operating device in accordance with Claim 1
**characterised in that**
the time display (8.2) in the vehicle also serves as a display of the desired ON time input into a storage device (6.3) at least during the time programming of the pre-selection time module (6.2).

3. An operating device in accordance with Claim 1
**characterised in that**
the pre-selection time module (6.2) is time programmed by means of a transmitter (1), with the transmitter (1) having a transmitter display (1.2), an ON/OFF switch (1.1), a programming button (1.3), a forwards button (1.4) and a backwards button (1.5), and it being possible to program several desired ON times using the transmitter (1).

4. An operating device in accordance with Claim 3
**characterised in that**
the transmitter display (1.2) displays the desired ON time at least during the time programming of the pre-selection time module (6.2).

5. An operating device in accordance with Claim 3
**characterised in that**
the various programmed ON times can be called up and displayed on the transmitter display (1.2) using the programming button (1.3) in a roll mode.

6. An operating device in accordance with Claim 3
**characterised in that**
the transmitter (1) contains additional operating elements which are required to operate other vehicle components.

7. An operating device in accordance with Claim 1
**characterised in that**
the pre-selection time module (6.2) comprises a storage device (6.3) and a comparator (6.4).

8. An operating device in accordance with Claim 1
**characterised in that**
the pre-selection time module (6.2) is integrated in the control device (6).

9. An operating device in accordance with Claim 1
**characterised in that**
the clock (8) is part of a combination instrument (4).

10. An operating device in accordance with Claim 1
**characterised in that**
the time display (8.2), the timer (8.1) and the pre-selection time module (6.2) are combined in one component.

11. An operating device in accordance with Claim 10
**characterised in that**
the component is part of the combination element (4).

12. An operating device in accordance with Claim 1
**characterised in that**
at least one signalling means is provided in the operating unit (3), with the signal means emitting signals which signal an operating status of the auxiliary heating system.

## Revendications

1. Dispositif de commande pour un chauffage supplémentaire dans des véhicules automobiles, constitué d'un module à temps présélectionné (6.2), un transducteur de temps, un affichage de temps, une unité de commande (3) et un appareil de commande (6), l'ensemble étant disposé à l'intérieur du véhicule, le chauffage supplémentaire étant programmable temporellement par l'intermédiaire du module à temps présélectionné (6.2), dans le transducteur de temps étant généré un signal de temps représentatif de l'heure actuelle, et le signal de temps étant amené tant au module de temps présélectionné qu'également à l'affichage de temps,
caractérisé en ce que,
pour générer le signal de temps et pour afficher l'heure actuelle, sont utilisés un transducteur de temps (8.1) et un affichage de temps (8.2) d'une horloge (8), montée en outre dans le véhicule.

2. Dispositif de commande selon la revendication 1,
caractérisé en ce que
l'affichage de temps (8.2) situé côté véhicule sert, au moins pendant la programmation de temps du module à temps présélectionné (6.2), de visuel d'affichage du temps de mise en service souhaité, introduit dans une mémoire (6.3).

3. Dispositif de commande selon la revendication 1,
caractérisé en ce que
la programmation de temps du module à temps présélectionné (6.2) est effectuée au moyen d'un émetteur (1), l'émetteur (1) présentant un affichage d'émetteur (1.2), un interrupteur de mise en service/hors service (1.1), une touche de programmation (1.3), une touche de réglage avant (1.4) et une touche de réglage arrière (1.5), et plusieurs temps de mise en service souhaités pouvant être programmés à l'aide de l'émetteur (1).

4. Dispositif de commande selon la revendication 3,
caractérisé en ce que l'affichage d'émetteur (1.2) affiche le temps de mise en service souhaité au moins pendant la programmation de temps du module à temps présélectionné (6.2).

5. Dispositif de commande selon la revendication 3,
caractérisé en ce que,
avec la touche de programmation (1.3) en mode déroulement, on peut interroger les différents temps de mise en service programmés et les afficher sur l'affichage d'émetteur (1.2).

6. Dispositif de commande selon la revendication 3,
caractérisé en ce que
l'émetteur (1) contient des éléments de commande supplémentaires qui sont nécessaires pour la commande d'autres composants du véhicule.

7. Dispositif de commande selon la revendication 1,
caractérisé en ce que
le module de temps présélectionné (6.2) comprend une mémoire (6.3) et un comparateur (6.4).

8. Dispositif de commande selon la revendication 1,
caractérisé en ce que
le module de temps présélectionné (6.2) est intégré dans l'appareil de commande (6).

9. Dispositif de commande selon la revendication 1,
caractérisé en ce que
l'horloge (8) fait partie d'un instrument combiné (4).

10. Dispositif de commande selon la revendication 1,
caractérisé en ce que l'affichage de temps (8.2), le transducteur de temps (8.1) et le module .à temps présélectionné (6.2) sont regroupés en un composant.

11. Dispositif de commande selon la revendication 10,
caractérisé en ce que
le composant fait partie de l'instrument à combinaison (4).

12. Dispositif de commande selon la revendication 1,
caractérisé en ce que,
dans l'unité de commande (3), est prévu au moins un moyen de signalisation, les moyens de signalisation envoyant des signaux signalant chacun un état de fonctionnement du chauffage supplémentaire.
